# EUROPÄISCHE PATENTSCHRIFT

(11) **EP 3 691 118 B1**
(45) Veröffentlichungstag und Bekanntmachung des Hinweises auf die Patenterteilung: **06.11.2024**
(21) Anmeldenummer: 20164842.5
(22) Anmeldetag: 20.09.2016
(51) Int. Cl.: H02S 20/30, F24S 30/452, F24S 30/48, F24S 30/00

(54) **SCHWENK- UND FÄCHERANTRIEB FÜR SOLARPANEELE**
PIVOTING AND COMPARTMENT DRIVE FOR SOLAR PANELS
ENTRAÎNEMENT À PIVOTEMENT ET DÉPLOIEMENT POUR PANNEAUX SOLAIRES

(30) Priorität: 02.10.2015 AT 508402015
(43) Veröffentlichungstag der Anmeldung: 05.08.2020
(62) Teilanmeldung aus: 16793730.9
(73) Patentinhaber: SFS Acquisition, LLC., Boston, MA 02116 (US)
(72) Erfinder: STÖGER, Elmar, 2822 Bad Erlach (AT); SWATEK, Alexander, 7540 Güssing (AT); ZACH, Gerald, 1220 Wien (AT)
(74) Vertreter: Hoffmann Eitle

(56) Entgegenhaltungen:
- WO-A1-2011/134004
- WO-A1-2012/073705
- AT-A4- 509 886
- ES-A1- 473 356
- KR-A- 20090 037 100

## Beschreibung

Die vorliegende Erfindung betrifft einen Schwenk- und Fächerantrieb für Solarpaneele, mit einem Drehteller und einer Schwenkplatte, an der die Solarpaneele um eine Fächerachse herum ein- und auffächerbar lagerbar sind.

Solarpaneele, die mittels eines derartigen Antriebs auffächerbar und dem Sonnenstand nachführbar sind, sind beispielsweise aus der AT 509.886 B1, AT 512.680 B1 und AT 513.875 B1 derselben Anmelderin bekannt (wobei AT 509.886 A4 die Grundlage für die zweiteilige Fassung des Anspruchs 1 bildet). Die Solarpaneele können dabei durch Verdrehen der Fächerwelle, auf der sie gelagert sind, von einer geschützten Stellung, in der sie im Wesentlichen deckungsgleich gestapelt übereinanderliegen, in eine aufgefächerte Betriebsstellung aufgefächert werden und umgekehrt. Dazu ist das oberste (oder unterste) Solarpaneel des Stapels drehfest mit der Fächerwelle verbunden, während die restlichen Solarpaneele auf der Fächerwelle drehbeweglich sind, und schleppt über Mitnehmer das jeweils nächste Solarpaneel - und dieses wiederum das nächste Solarpaneel usw. usf. - beim Auf- und Einfächern mit. In der aufgefächerten Betriebsstellung können die Solarpaneele durch Verschwenken des Drehtellers und der Schwenkplatte in Azimut- und Elevationswinkel auf die Sonne ausgerichtet werden.

WO 2011/134004 A1 offenbart einen Antriebsmechanismus, um Solarpaneele nach dem Sonnenstand auszurichten.

Die Erfindung setzt sich zum Ziel, einen Schwenk- und Fächerantrieb für derartige Solarpaneele zu schaffen, welcher einfacher aufgebaut, platzsparender und weniger störungsanfällig ist als die bekannten Konstruktionen.

Dieses Ziel wird mit einem Schwenk- und Fächerantrieb der einleitend genannten Art erreicht, welcher sich gemäß der Erfindung dadurch auszeichnet, dass zumindest eine Kurbel an dem Drehteller drehbar gelagert ist und dass ein Pleuel die Kurbel mit der Schwenkplatte so koppelt, dass der Drehteller, die Schwenkplatte, die Kurbel und das Pleuel ein Kurbelschwingengetriebe bilden und eine Schwenkbewegung der Kurbel die Schwenkplatte um eine im Wesentlichen horizontale Achse herum verschwenkt.

Der Aufbau eines Kurbelschwingengetriebes aus Drehteller, Schwenkplatte, Kurbel und Pleuel führt zu einer sehr kompakten, platzsparenden Konstruktion, bei welcher die Schwenkplatte in eine Ruhestellung, z.B. zu Schutzzwecken, eingeschwenkt werden kann, in der sie im Wesentlichen parallel zu und über dem Drehteller liegen kann. Zu Transportzwecken kann die Schwenkplatte in eine etwa vertikale Endstellung ausgeschwenkt werden, in welcher Kurbel und Pleuel bevorzugt im Wesentlichen gestreckt sind. Dadurch wirken Kräfte, z.B. infolge von auf den Fächerkopf einwirkenden Stößen, auf die Achslager und nicht auf empfindlichere Getriebeteile an der Kurbelachse. Gleichzeitig benötigt dies nur sehr wenige Teile, nämlich Kurbel und Pleuel, um das Schwenkgetriebe für die Schwenkplatte aufzubauen, was die Fertigung vereinfacht. Die Verwendung eines Kurbelschwingengetriebes für die Schwenkplatte führt auch zu einem überaus störungsunanfälligen Betrieb, da die Kurbel voll drehfähig bleibt und somit ein versehentliches Überdrehen eines sie antreibenden Motors zu keinerlei Blockierung oder Beschädigung des Motors oder Mechanismus führen kann.

Bevorzugt liegt die Lagerachse der Kurbel am Drehteller tiefer als die zweite Achse, was bei entsprechender Dimensionierung von Kurbel, Pleuel und wirksamen Gelenkabständen von Drehteller und Schwenkplatte dazu verwendet werden kann, die Schwenkplatte beispielsweise von einer horizontalen Ruhestellung über beliebige Schrägstellungen bis zu einer aufrechten Endstellung zu verschwenken, damit sie dem Sonnenstand folgen kann.

Eine besonders robuste und platzsparende Ausführung ergibt sich, wenn gemäß einem bevorzugten Merkmal der Erfindung der Drehteller zwei hochragende Lagerarme aufweist, zwischen welchen das genannte eine Ende der Schwenkplatte gelagert ist. Aus denselben Gründen können bevorzugt zwei Kurbeln mit je einem Pleuel vorgesehen sein, zwischen welchen das genannte andere Ende der Schwenkplatte gelagert ist.

In einer vorteilhaften Ausführungsform können dabei die Kurbeln auf einer gemeinsamen Welle sitzen, die in Lagerlaschen des Drehtellers gelagert ist, so dass nur ein Antrieb für beide Kurbeln erforderlich ist. Dabei kann insbesondere der Drehteller - gegebenenfalls mit Lagerarmen und Lagerlaschen, falls vorhanden - einstückig gefertigt sein, bevorzugt als ein Gussteil, was die Endmontage des Antriebs in der Fertigung wesentlich vereinfacht.

Der Schwenk- und Fächerantrieb der Erfindung kann manuell betätigt werden. Bevorzugt ist er jedoch für einen Motorbetrieb ausgelegt, u.zw. sowohl für eine vollautomatische Sonnenstandsnachführung der Solarpaneele als auch deren vollautomatisches Ein- und Auffächern, beispielsweise um sie in der Nacht oder bei Wind und Regen in eine geschützte eingefächerte Stellung zu verbringen.

Die Schwenkbewegungen um die genannten drei Achsen können dazu mittels jeglicher in der Technik bekannter Antriebe bewerkstelligt werden, beispielsweise hydraulischer oder pneumatischer Antriebe oder elektrischer Stellmotoren, z.B. langsamdrehender oder getriebeuntersetzter Elektromotoren oder Schrittschaltmotoren. Als Getriebe kommen dabei die in der Technik bekannten Getriebe, z.B. Planetengetriebe, auch als Winkelgetriebe, z.B. Planetenumlenkgetriebe, in Frage.

In bevorzugten Ausführungsformen der Erfindung werden Elektromotoren mit untersetzenden Schneckengetrieben verwendet, d.h. die Kurbel(n) werden bevorzugt über ein erstes Schneckengetriebe von einem am Drehteller montierten ersten Elektromotor angetrieben; und/oder der Drehteller über ein zweites Schneckengetriebe von einem am Grundträger montierten zweiten Elektromotor; und/oder die Fächerwelle über ein drittes Schneckengetriebe von einem an der Schwenkplatte montierten dritten Elektromotor.

Gemäß einem weiteren Aspekt der Erfindung wird anstelle eines eigenen dritten Antriebs für die Fächerwelle einer der beiden anderen Antriebe mitverwendet: Durch wahlweises Kuppeln der Fächerwelle mit dem Drehteller oder dessen Antrieb oder mit der Schwenkplatte oder deren Antrieb kann das Auf- und Einfächern der Solarpaneele während der Azimut-Verdrehung des Drehtellers oder Elevations-Verschwenkung der Schwenkplatte bewirkt werden. Nach dem gewünschten Auf- bzw. Einfächern der Solarpaneele wird die Kupplung wieder gelöst, und die Antriebe des Drehtellers und der Schwenkplatte können wieder ausschließlich für die Azimut- und Elevationsverstellung verwendet werden.

Besonders günstig ist es, wenn für den Antrieb der Fächerwelle der Drehtellerantrieb mitverwendet wird, d.h. die Fächerwelle über eine Kupplung vom Drehteller oder dessen Antrieb antreibbar ist, und dabei gleichzeitig die Kupplung automatisch durch das Verschwenken der Schwenkplatte betätigt wird. So kann insbesondere die Kupplung in einer Ruhestellung der Schwenkplatte geschlossen und in einer davon abweichenden Schwenkstellung der Schwenkplatte geöffnet sein. Beispielsweise ist die Ruhestellung der Schwenkplatte deren horizontale, parallel über und deckungsgleich zum Drehteller liegende Stellung, in welcher die Kupplung schließt. Der Drehtellerantrieb kann nun zum Auffächern der Solarpaneele verwendet werden, woraufhin diese mittels des Schwenkantriebs in ihrer Elevation auf die Sonne ausgerichtet werden, was die Kupplung löst und den Drehtellerantrieb wieder ausschließlich für Azimutverstellung nutzbar macht.

Eine vorteilhafte praktische Ausführungsform der Erfindung zeichnet sich dadurch aus, dass die Kupplung durch ein vom Drehteller über eine Getriebewelle angetriebenes Ritzel und einen auf der Fächerwelle sitzenden Zahnkranz gebildet ist, welcher beim Einschwenken der Schwenkplatte in die Ruhestellung in Eingriff mit dem Ritzel und beim Ausschwenken der Schwenkplatte aus der Ruhestellung außer Eingriff kommt. Dies ergibt ein automatisches Ein- und Auskuppeln der Kupplung zwischen Drehtellerantrieb und Fächerwelle beim Verschwenken der Schwenkplatte.

Um zu verhindern, dass sich im Betrieb die Fächerwelle, nachdem die genannte Kupplung zur Separierung der Azimut- und Elevationsantriebe gelöst wurde, unbeabsichtigt verdreht, kann gemäß einem weiteren bevorzugten Merkmal der Erfindung die Fächerwelle über eine weitere Kupplung gegenüber der Schwenkplatte selektiv drehfixiert werden. Auch diese weitere Kupplung kann automatisch bei der Schwenkbewegung der Schwenkplatte betätigt werden, und zwar ist insbesondere die weitere Kupplung in der Ruhestellung der Schwenkplatte geöffnet und in einer davon abweichenden Schwenkstellung der Schwenkplatte geschlossen. In einer bevorzugten Ausführungsform dieser Variante kann dazu die weitere Kupplung eine mit der Fächerwelle drehfeste und gegen eine Bremsfläche der Schwenkplatte federnd vorgespannte Bremsscheibe sein, welche von einem Betätigungsglied des Drehtellers beim Verschwenken der Schwenkplatte in die Ruhestellung von der Bremsfläche distanzierbar ist, was eine störungsunanfällige automatische Betätigung der zweiten Kupplung ermöglicht. Dies kann alternativ auch dadurch bewirkt werden, dass die weitere Kupplung ein an der Schwenkplatte drehfest, aber axialbeweglich federbeaufschlagtes Bremsritzel ist, welches Bremszähne zum kämmenden Eingriff mit dem Zahnkranz hat und beim Verschwenken der Schwenkplatte in die Ruhestellung gegen die Federbeaufschlagung aus dem kämmenden Eingriff drückbar ist.

Die Erfindung wird nachstehend anhand von in den beigeschlossenen Zeichnungen dargestellten Ausführungsbeispielen näher erläutert. In den Zeichnungen zeigen
die Fig. 1 und 2 ein Solarmodul mit auffächerbaren Solarpaneelen in zwei verschiedenen Betriebstellungen jeweils in einer schematischen Perspektivansicht von schräg oben;
die Fig. 3 und 4 einen erfindungsgemäßen Schwenk- und Fächerantrieb für das Solarmodul der Fig. 1 und 2 in zwei verschiedenen Betriebsstellungen, und zwar einmal in einer Perspektivansicht von schräg oben (Fig. 3) und einmal in einer Perspektivansicht von schräg unten (Fig. 4);
die Fig. 5 bis 7 den Schwenk- und Fächerantrieb der Fig. 3 und 4 in einer Seitenansicht (Fig. 5), einer Draufsicht (Fig. 6) und einer Rückansicht (Fig. 7); und
die Fig. 8 bis 11 zwei Varianten einer alternativen Ausführungsform des Schwenk- und Fächerantriebs der Fig. 3 bis 7 jeweils in zwei verschiedenen Betriebsstellungen im Schnitt.

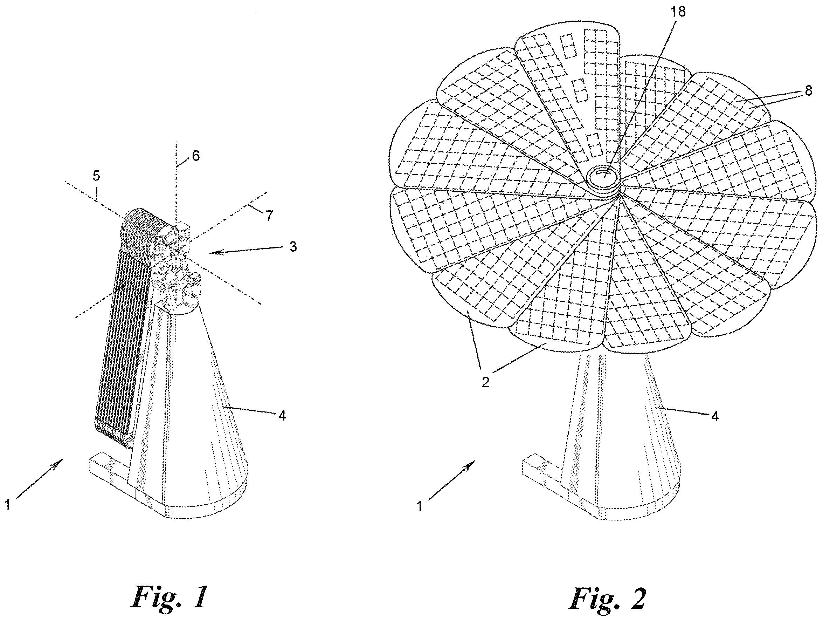

In der Fig. 1 und 2 ist ein Solarmodul 1 mit einer Vielzahl von lamellenförmigen Solarpaneelen 2 gezeigt, die über einen Schwenk- und Fächerantrieb 3 an einer Verankerung 4 schwenk- und auffächerbar gelagert sind. Die Solarpaneele 2 können so von einer ersten, in Fig. 1 gezeigten eingefächerten Stellung, in der sie im Wesentlichen deckungsgleich in einem Stapel übereinanderliegen, in eine zweite, in Fig. 2 gezeigte aufgefächerte Stellung, in welcher sie um eine gemeinsame Auffächerachse 5 herum aufgefächert sind und damit im Wesentlichen nebeneinanderliegen, verbracht werden und umgekehrt. Mit Hilfe des Schwenk- und Fächerantriebs 3 kann dabei die Auffächerachse 5 um eine erste, im Wesentlichen vertikale Achse 6 in Azimut und um eine zweite, im wesentliche horizontale Achse 7 in Elevation verstellt werden, um die aufgefächerten Solarpaneele 2 auf die Sonne auszurichten und dieser nachzuführen. Die Verankerung 4 kann dabei von jeglicher Art sein, beispielsweise ein Ständer bzw. Stativ wie gezeigt, aber auch ein Gebäudeteil, eine Bodenverankerung, ein Schiffsteil, ein Fahrzeug, ein Container od. dgl.

Die Solarpaneele 2 besitzen etwa Kreissektorform, bevorzugt mit abgerundeten Ecken ("Blütenblattform") wie dargestellt, und ergänzen sich in ihrer aufgefächerten Stellung (Fig. 2) bevorzugt - wenn auch nicht zwingend - zu einem Vollkreis. Beispielsweise sind zwölf Solarpaneele 2 vorgesehen, deren Kreissektorwinkel jeweils ca. 30° beträgt, wobei der Auffächer- bzw. Verschwenkwinkel eines Solarpaneels 2 gegenüber seinem benachbarten Solarpaneel 2 dementsprechend etwa 30° beträgt.

Jedes Solarpaneel 2 weist auf seiner Oberseite ein flächiges Array von photovoltaischen Zellen 8 auf, z.B. in kristalliner oder organischer Form oder in Dünnschichttechnologie. Die elektrischen Anschlüsse und Verschaltungen der Solarpaneele 2 und Solarzellen 8 sind zwecks Übersichtlichkeit nicht gezeigt; beispielsweise werden die Solarpaneele 2 über flexible Anschlusskabel oder Schleifkontakte und starre Kontaktringe an der Verankerung 4 bzw. dem Schwenk- und Fächerantrieb 3 kontaktiert und an die weitere Energieübertragungselektrik angeschlossen.

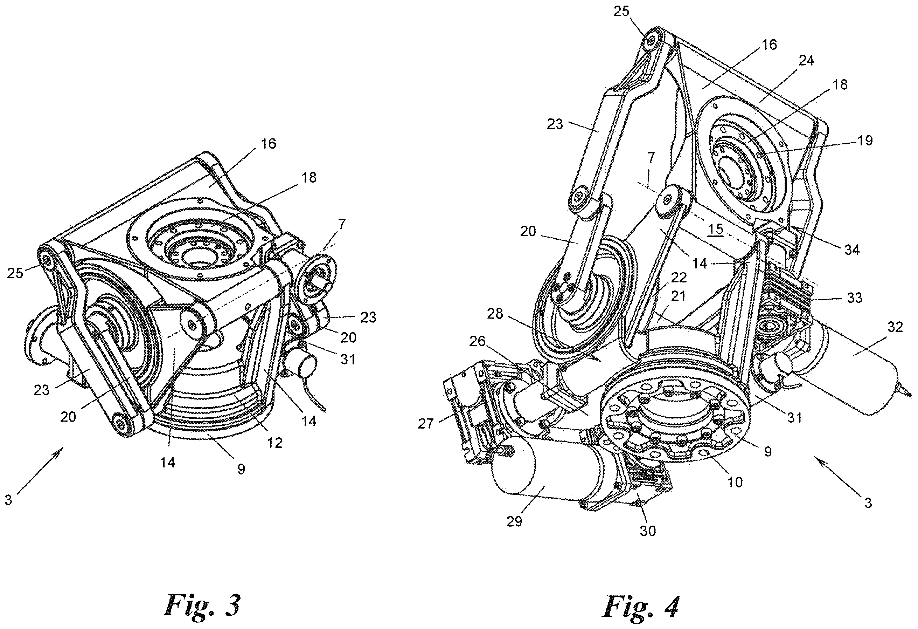

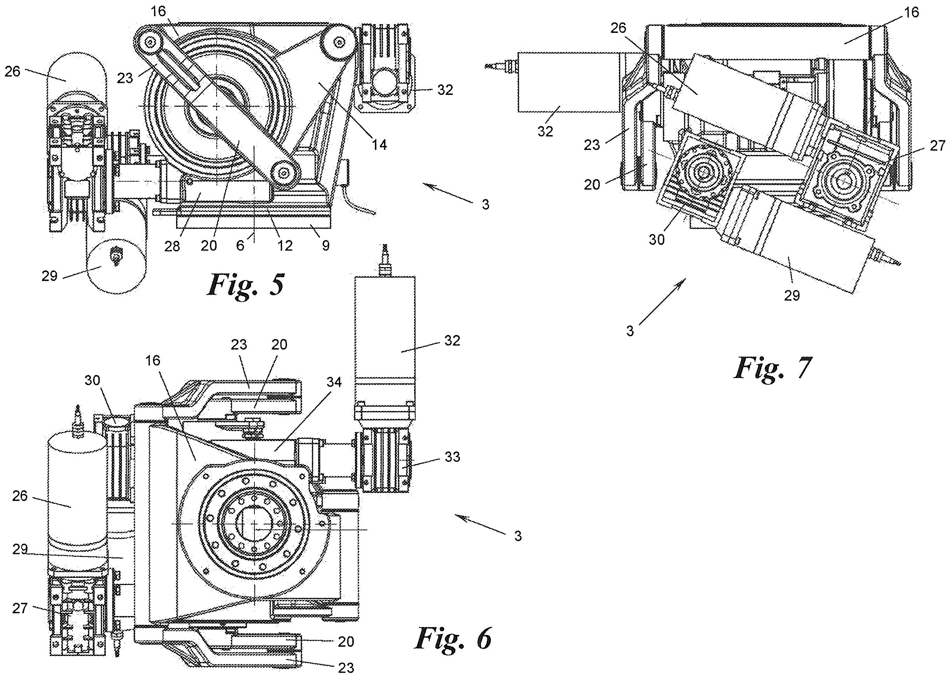

Die Fig. 3 bis 9 zeigen den Schwenk- und Fächerantrieb 3 für die Solarpaneele 2 im Detail. Der Schwenk- und Fächerantrieb 3 umfasst einen Grundträger 9, hier in Form eines Ringflansches, der beispielsweise über Bohrungen 10 auf das obere Ende der Verankerung 4 geschraubt werden kann. Auf dem Grundträger 9 ist über ein Kugellager 11 ein Drehteller 12 um die Achse 6 zumindest schwenkbar, bevorzugt voll drehbar, gelagert.

Der Drehteller 12 besitzt an seinem einen Ende 13 zwei schräg nach oben hochragende und voneinander beabstandete Lagerarme 14, zwischen denen das eine Ende 15 einer Schwenkplatte 16 um die Achse 7 schwenkbar gelagert ist. Die Schwenkplatte 16 könnte auch auf andere Weise am Drehteller 12 schwenkbar gelagert sein, beispielsweise mit Hilfe eines Scharniers. Es ist hervorzuheben, dass sich die Begriffe "Drehteller" und "Schwenkplatte" nicht wörtlich auf eine Teller- bzw. Plattenform beziehen, sondern auf deren Funktion, d.h. der Drehteller 12 könnte auch eine andere als Tellerform haben, beispielsweise in Form einer Nabe, eines Wellenstutzens, eines Blocks usw.; und die Schwenkplatte 16 könnte auch eine andere Form als eine Plattenform haben, z.B. eine Nabe, ein Stutzen, ein Block oder ein beliebig geformter Träger sein.

Auf bzw. in der Schwenkplatte 16 ist über ein Kugellager 17 eine Fächerwelle 18 um die Auffächerachse 5 zumindest schwenkbar, bevorzugt voll drehbar, gelagert. Von der Fächerwelle 18 ist in den Fig. 3 bis 9 nur ihr antriebsseitiger, als Ringflansch ausgebildeter Endteil dargestellt, an welchen beispielsweise über Bohrungen 19 der restliche, in Fig. 2 erkennbare Teil der Fächerwelle 18 angeflanscht werden kann, der die Solarpaneele 2 trägt. Durch Verdrehen der Fächerwelle 18 können die Solarpaneele 2 von der eingefächerten Stellung (Fig. 1) in die aufgefächerte Stellung (Fig. 2) verbracht werden und umgekehrt. Dazu kann z.B. das oberste (oder unterste) Solarpaneel 2 des Stapels (Fig. 1) mit der Fächerwelle 18 drehfest verbunden werden und das unterste (oder oberste) Solarpaneel 2 mit der Schwenkplatte 16 drehfest verbunden werden, wobei jeweils eines der Solarpaneele 2 mittels Schleppleisten, Schlepphaken, Mitnehmern oder dgl. das benachbarte Solarpaneel 2 beim Auf- oder Einfächern mitschleppt, bis alle Solarpaneele 2 auf- bzw. eingefächert sind.

Das Übereinandergleiten der Solarpaneele 2 bei dieser Schleppbewegung kann für eine Reinigung der Solarpaneele 2 ausgenützt werden. Zu diesem Zweck ist optional jedes Solarpaneel 2 (mit Ausnahme des untersten Solarpaneels 2) auf seiner Rückseite mit einer Kehrlippe ausgestattet, welche beim Auffächern das jeweils darunterliegende Solarpaneel 2 abkehrt. Die Kehrlippe kann beispielsweise eine Gummilippe oder eine Bürstenlippe sein und dabei gleichzeitig die Schleppleiste bilden.

Das Verschwenken der Schwenkplatte 16 gegenüber dem Drehteller 12 erfolgt mit Hilfe zumindest einer (hier: zwei) Kurbeln 20, die auf einer gemeinsamen Welle 21 sitzen, welche in Lagerlaschen 22 des Drehtellers 12 gelagert sind, und zwar so, dass die Achse 21' der Welle 21 parallel zu und in einem Abstand von der Schwenkachse 7 der Schwenkplatte 16 liegt. Die Lagerlaschen 22 können durch die Fußbereiche der Lagerarme 14 oder davon gesondert ausgebildet sein.

Die Kurbeln 20 sind jeweils an ihren der Welle 21 abgewandten Enden über ein Pleuel 23 mit dem dem Ende 15 gegenüberliegenden anderen Ende 24 der Schwenkplatte 16 an einer Anlenkachse 25 gekoppelt.

Die vier Teile Drehteller 12, Schwenkplatte 16, Kurbeln 20 und Pleuel 23 bilden ein Viergelenk-Koppelgetriebe, u.zw. genauer ein Kurbelschwingengetriebe, dessen "Kurbel" die Kurbeln 20, dessen "Schwinge" die Schwenkplatte 16, dessen "Gestell" der Drehteller 2 und dessen "Koppelglied" die Pleuel 23 sind. Die Gestelllänge zwischen Wellenachse 21' und Schwenkachse 7, die Schwingenlänge zwischen Schwenkachse 7 und Anlenkachse 25, sowie die wirksamen Längen der Kurbel 20 und Pleuel 23 bestimmen die Kinematik des Kurbelschwingengetriebes, wie in der Technik bekannt. Die genannten Längen werden bevorzugt - dies ist nicht zwingend - so gewählt, dass die Schwenkplatte 16 eine etwa 90°-Schwenkbewegung von einer etwa horizontalen Ruhestellung (Fig. 3) in eine etwa vertikale Endstellung (Fig. 4) ausführt und zurück, wenn die Kurbeln 20 eine volle Umdrehung ausführen.

Bevorzugt liegt dabei die Wellenachse 21' der Kurbeln 20 schräg unterhalb der Schwenkachse 7, so dass in der Ruhestellung (Fig. 3) die Schwenkplatte 16 etwa parallel zu und über dem Drehteller 12 liegt, wenn die Kurbeln 20 und Pleuel 23 in ihrer maximal verkürzten Stellung sind. Dies hat einen sehr geringen Platzbedarf in der Ruhestellung zur Folge hat, siehe Fig. 3. In der maximal ausgeschwenkten Endstellung von Fig. 4 befinden sich die Kurbeln 20 und Pleuel 23 in ihrer maximal gestreckten Stellung.

Die Bewegungen des Schwenk- und Fächerantriebs 3 um eine oder mehrere der Achsen 5, 6, 7 können im einfachsten Fall manuell vorgenommen werden. Bevorzugt werden die Bewegungen um eine oder mehrere der Achsen 5, 6, 7 jedoch durch entsprechende Antriebe bewerkstelligt, beispielsweise Hydraulik- oder Pneumatikzylinder, Stellmotoren, Schrittschaltmotoren oder dgl. In den Fig. 3 bis 7 ist eine erste Ausführungsform gezeigt, in welcher für jede der drei Bewegungen jeweils ein getriebeuntersetzter Elektroantrieb vorgesehen ist.

Dazu ist am Drehteller 12 ein erster Elektromotor 26 mit angeflanschtem Winkelgetriebe 27 montiert, der über ein erstes Schneckengetriebe 28 eine der Kurbeln 20 oder deren Welle 21 antreibt. Das erste Schneckengetriebe 28 umfasst beispielsweise eine vom Elektromotor 26 über das Winkelgetriebe 27 angetriebene Schnecke, die in ein auf einer Kurbel 20 oder der Welle 21 sitzendes Schneckenrad eingreift.

Ein zweiter Elektromotor 29 mit angeflanschtem Winkelgetriebe 30 ist am Grundträger 9 montiert und treibt über ein zweites Schneckengetriebe 31, das beispielsweise eine in ein Schneckenrad des Drehtellers 12 eingreifende Schnecke aufweist, den Drehteller 12 an.

Ein dritter Elektromotor 32 mit angeflanschtem Winkelgetriebe 33 ist an der Schwenkplatte 16 montiert und treibt über ein drittes Schneckengetriebe 34 die Fächerwelle 18 an, beispielsweise wieder mit Hilfe einer Schnecke, die in ein mit der Fächerwelle 18 verbundenes Schneckenrad eingreift.

Es versteht sich, dass anstelle eines oder mehrerer der Schneckengetriebe auch geeignete andere Getriebe, z.B. Stirnrad-, Planeten- oder Winkelgetriebe, wie Kegelrad-, Kronenrad- oder Planetenumlenkgetriebe, u.zw. mit jeweils einer oder mehreren Getriebestufen, eingesetzt werden können.

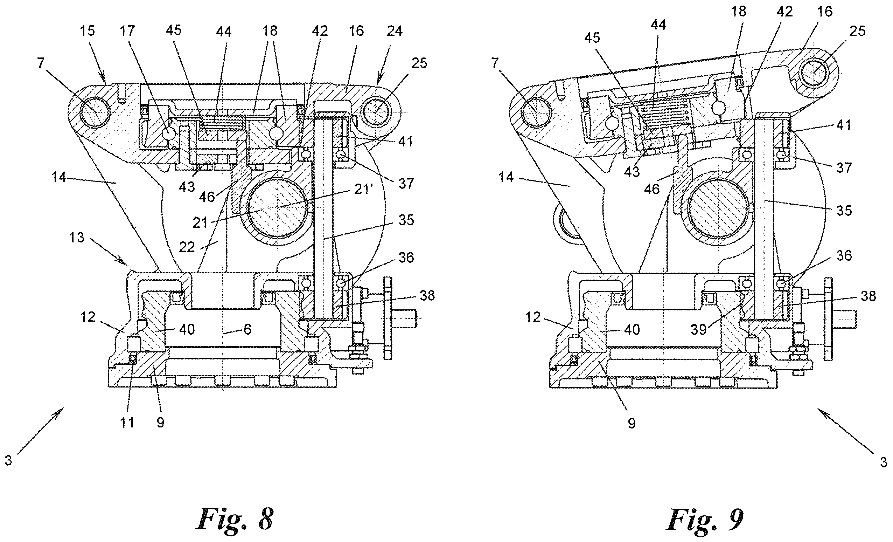

In den Fig. 8 bis 11 sind Varianten einer zweiten Ausführungsform für den Antrieb der Fächerwelle 18 gezeigt, und zwar ist für diese kein eigener Elektroantrieb vorgesehen, sondern es wird hierfür der Antrieb des Drehtellers 12 wahlweise mitverwendet. Zu diesem Zweck ist auf dem Drehteller 12 und/oder einer seiner Lagerlaschen 22 eine Getriebewelle 35 mit etwa vertikaler Drehachse in Lagern 36, 37 gelagert. Die Getriebewelle 35 hat an ihrem unteren Ende ein Ritzel 38, das mit einem Zahnkranz 39 kämmt, der am Außenumfang eines Flansches 40 des Grundträgers 9 ausgebildet ist. Bei Drehung des Drehtellers 12 gegenüber dem Grundträger 9 bzw. dessen Flansch 40 wird somit die Getriebewelle 35 in Drehung versetzt.

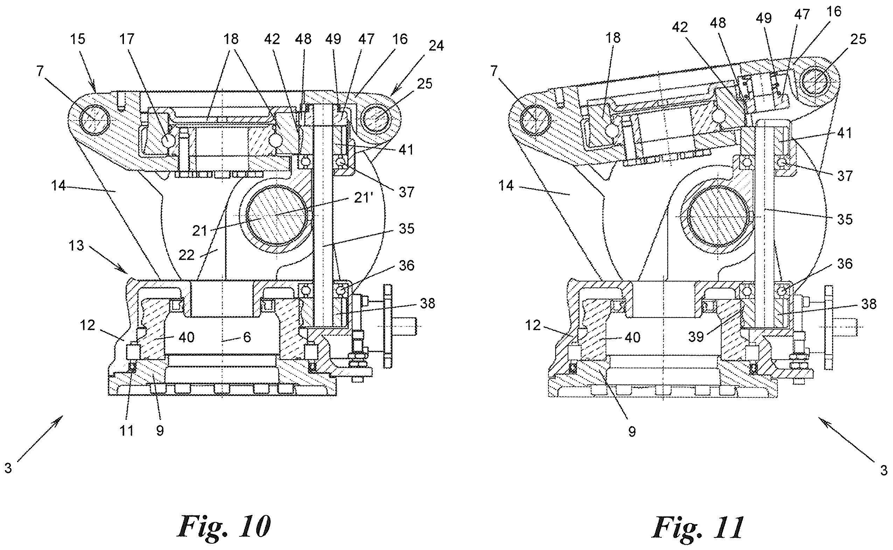

An ihrem oberen Ende trägt die Getriebewelle 35 ein weiteres Ritzel 41, das in der herabgeschwenkten Stellung der Schwenkplatte 16 (Fig. 8 bzw. 10) mit einem Zahnkranz 42 in Eingriff kommt, der am Außenumfang der Fächerwelle 18 ausgebildet ist. In dieser Stellung treibt somit der zweite Elektromotor 29 sowohl den Drehteller 12 als auch - über den Eingriff von Ritzel 41 und Zahnkranz 42 - die Fächerwelle 18 an, so dass während der Drehung um die Achse 6 gleichzeitig die Solarpaneele 2 um die Achse 5 auf- oder eingefächert werden.

Das Ritzel 41 und der Zahnkranz 42 bilden somit eine Kupplung zwischen dem Drehteller 12 bzw. dessen Antrieb und der Fächerwelle 18, die in der in den Fig. 8 und 10 gezeigten Ruhestellung der Schwenkplatte 16 geschlossen ist. Beim Hochschwenken der Schwenkplatte 16 öffnet die Kupplung, siehe die Fig. 9 bzw. 11, d.h. Ritzel 41 und Zahnkranz 42 kommen außer Eingriff, so dass nun der Elektromotor 29 wieder ausschließlich für den Drehantrieb um die Achse 6, d.h. die Azimutverstellung der Solarpaneele 2, verwendet werden kann.

Beim Herabschwenken bzw. Einschwenken der Schwenkplatte 16 in die Ruhestellung (Fig. 8 bzw. 10) wird die Kupplung 41, 42 wieder geschlossen und es kann dann wieder der Elektromotor 29 zum z.B. Einfächern der Solarpaneele 2 mitverwendet werden.

Falls gewünscht, können in der eingefächerten Stellung die gestapelten Solarpaneele 2 durch Drehung um die Schwenkachse 7 herabgeschwenkt werden, so dass sie die in Fig. 1 gezeigte herabhängende Schutzstellung gegenüber Wind und Wetter einnehmen.

Es versteht sich, dass anstelle des zweiten Elektromotors 29 des Drehtellerantriebs auch der erste Elektromotor 26 für des Schwenkplattenantriebs für das wahlweise Antreiben der Fächerwelle 18 mitverwendet werden kann, in welchem Fall eine gleichartige Kupplung zwischen der Schwenkplatte 16 bzw. deren Antrieb 26 und der Fächerwelle 18 vorgesehen wird.

Wenn die Kupplung 41, 42 der Fächerwelle 18 in einer von der Ruhestellung (Fig. 8 bzw. 10) abweichenden Stellung gelöst ist, kann eine weitere Kupplung dazu verwendet werden, um die Fächerwelle 18 gegenüber der Schwenkplatte 16 temporär drehzufixieren, damit eine unbeabsichtigte Änderung der Ein- bzw. Auffächerstellung der Solarpaneele 2 insbesondere während deren Azimut- und Elevationsverstellung vermieden wird. Die weitere Kupplung umfasst in der Ausführungsvariante der Fig. 8 und 9 eine mit der Fächerwelle 18 drehfest verbundene und gegen eine Bremsfläche 43 der Schwenkplatte 16 mittels einer Feder 44 vorgespannte Bremsscheibe 45. Die Bremsscheibe 45 wird beim Verschwenken der Schwenkplatte 16 in die Ruhestellung durch ein am Drehteller 12 angebrachtes Betätigungsglied 46 von der Bremsfläche 43 abgehoben, siehe Fig. 8. Beim Hochschwenken der Schwenkplatte 16 gelangt das Betätigungsglied 46 außer Eingriff von der Bremsscheibe 45, so dass diese durch die Feder 44 gegen die Bremsfläche 43 gedrückt wird und damit die Fächerwelle 18 bezüglich der Schwenkplatte 16 drehfixiert. Die weitere Kupplung 43 - 46 ist somit in der Ruhestellung der Schwenkplatte 16 geöffnet und in einer davon abweichenden Schwenkstellung der Schwenkplatte 16 geschlossen.

Anstelle der gezeigten Bremsscheiben/Bremsflächen-Konstruktion der Kupplung 43 - 46 kann auch jede andere Art von Kupplung verwendet werden, welche die gezeigte temporäre Festsetzung der Fächerwelle 18 ermöglicht.

Beispielsweise kann gemäß der in den Fig. 10 und 11 dargestellten Variante die Bremsfunktion der weiteren Kupplung alternativ durch ein Bremsritzel 47 oder dgl. mit Bremszähnen 48 erzielt werden, welches in der Stellung von Fig. 10 etwa in Flucht mit der Getriebewelle 35 an der Schwenkplatte 16 drehfest, aber axialbeweglich, d.h. in der Darstellung von Fig. 10 vertikalbeweglich, mittels einer Feder 49 nach unten belastet gelagert ist. Beim Hochschwenken der Schwenkplatte 16 (Fig. 11) wird dieses Bremsritzel 47 mit seinen Bremszähnen 48 federbeaufschlagt in kämmenden Eingriff mit dem Zahnkranz 42 gedrückt, um diesen drehzufixieren. In der Ruhestellung der Schwenkplatte 16 (Fig. 10) wird es von der Getriebewelle 35 gegen seine Federbeaufschlagung aus dem kämmenden Eingriff geschoben und gibt so den Zahnkranz 42 frei.

Es versteht sich, dass die Kupplungen 41, 42 und 43 - 49 auch manuell oder mittels elektrischer Stellglieder betätigt werden könnten, welche z.B. von einer auch die Elektromotoren 26 und 29 entsprechend steuernden Elektronik gesteuert werden können.

## Patentansprüche

1. Schwenk- und Fächerantrieb (3) für Solarpaneele (2), mit:
einem Drehteller (12), und
einer Schwenkplatte (16), an der die Solarpaneele (2) um eine Fächerachse (5) herum ein- und auffächerbar lagerbar sind,
**dadurch gekennzeichnet, dass** der Schwenk- und Fächerantrieb (3) weiter versehen ist mit:
zumindest einer Kurbel (20), die an dem Drehteller (12) drehbar gelagert ist, und
einem Pleuel (23), das die Kurbel (20) mit der Schwenkplatte (16) so koppelt, dass der Drehteller (12), die Schwenkplatte (16), die Kurbel (20) und das Pleuel (23) ein Kurbelschwingengetriebe bilden und eine Schwenkbewegung der Kurbel (20) die Schwenkplatte (16) um eine im Wesentlichen horizontale Achse (7) herum verschwenkt.

2. Schwenk- und Fächerantrieb nach Anspruch 1, bei welchem die Schwenkplatte (16) um die horizontale Achse (7) zwischen einer horizontalen und einer vertikalen Position verschwenkbar ist.

3. Schwenk- und Fächerantrieb nach Anspruch 1 oder 2, bei welchem die Schwenkplatte (16) an dem Drehteller (12) um die im Wesentlichen horizontale Achse (7) schwenkbar gelagert ist, vorzugsweise zwischen einer Ruhestellung, in der die Schwenkplatte (16) im Wesentlichen parallel zu und über dem Drehteller (12) liegt, und einer etwa vertikalen Endstellung, in der Kurbel (20) und Pleuel (23) im Wesentlichen gestreckt sind.

4. Schwenk- und Fächerantrieb nach Anspruch 3, bei welchem der Drehteller (12) ein Ende (15) der Schwenkplatte (16) um die genannte horizontale Achse (7) lagert und in einem Abstand dazu die zumindest eine Kurbel (20) lagert, welche über das Pleuel (23) mit dem anderen Ende (24) der Schwenkplatte (16) zur Bildung des Kurbelschwingengetriebes gekoppelt ist.

5. Schwenk- und Fächerantrieb nach Anspruch 4, bei welchem der Drehteller (12) zwei hochragende Lagerarme (14) aufweist, zwischen welchen das genannte eine Ende (15) der Schwenkplatte (16) gelagert ist.

6. Schwenk- und Fächerantrieb nach Anspruch 4 oder 5, bei welchem zwei Kurbeln (20) mit je einem Pleuel (23) vorgesehen sind und das genannte andere Ende (24) der Schwenkplatte (16) zwischen den beiden Pleueln (23) gelagert ist.

7. Schwenk- und Fächerantrieb nach Anspruch 6, bei welcher die Kurbeln (20) auf einer gemeinsamen Welle (21) sitzen, die in Lagerlaschen (22) des Drehtellers (12) gelagert ist, wobei eine Achse (21') der Welle (21) vorzugsweise parallel zu und in einem Abstand von der horizontalen Achse (7) liegt.

8. Schwenk- und Fächerantrieb nach einem der vorangehenden Ansprüche, bei welchem der Drehteller (12) - gegebenenfalls mit Lagerarmen (14) und Lagerlaschen (22), falls vorhanden - einstückig gefertigt ist, bevorzugt als ein Gussteil.

9. Schwenk- und Fächerantrieb nach einem der vorangehenden Ansprüche, bei welchem eine Lagerachse (21') der Kurbel (20) am Drehteller (12) tiefer liegt als die horizontale Achse (7).

10. Schwenk- und Fächerantrieb nach einem der vorangehenden Ansprüche, bei welchem die Kurbel(n) (20) über ein erstes Getriebe, z.B. ein erstes Schneckengetriebe (28), von einem am Drehteller (12) montierten ersten Antrieb wie z.B. einem ersten Elektromotor (26, 27) angetrieben ist/sind.

11. Schwenk- und Fächerantrieb nach einem der vorangehenden Ansprüche, weiter mit einem Grundträger (9), an dem der Drehteller (12) um eine im Wesentlichen vertikale Achse (6) zumindest schwenkbar, bevorzugt voll drehbar, gelagert ist.

12. Schwenk- und Fächerantrieb nach Anspruch 11, bei welchem der Drehteller (12) über ein zweites Getriebe, z.B. ein zweites Schneckengetriebe (31), von einem an dem Grundträger (9) montierten zweiten Antrieb wie z.B. einem zweiten Elektromotor (29, 30) angetrieben ist.

13. Schwenk- und Fächerantrieb nach einem der vorangehenden Ansprüche, weiter mit einer Fächerwelle (18), die auf der Schwenkplatte (16) so gelagert ist, dass sie relativ zur Schwenkplatte (16) um die Fächerachse (5) herum schwenkbar ist.

14. Schwenk- und Fächerantrieb nach Anspruch 13, weiter mit einer Anzahl von Solarpaneelen (2), die an der Fächerwelle (18) so angebracht sind, dass mindestens eines der Solarpaneele (2) zusammen mit der Fächerwelle (18) bewegbar ist.

15. Schwenk- und Fächerantrieb nach Anspruch 13 oder 14, bei welchem die Fächerwelle (18) über ein drittes Getriebe (34), z.B. ein drittes Schneckengetriebe (34), von einem an der Schwenkplatte (16) montierten dritten Antrieb wie z.B. einem dritten Elektromotor (32, 33) antreibbar ist.

16. Schwenk- und Fächerantrieb nach Anspruch 13 oder 14, bei welchem die Fächerwelle (18) über eine Kupplung von der Schwenkplatte (16) oder von einem Antrieb (26 - 28) der Schenkplatte (16) antreibbar ist.

17. Schwenk- und Fächerantrieb nach Anspruch 13 oder 14, bei welchem die Fächerwelle (18) über eine Kupplung (41, 42) vom Drehteller (12) oder von einem Antrieb (29 - 31) des Drehtellers (12) antreibbar ist.

18. Schwenk- und Fächerantrieb nach Anspruch 17, bei welchem die Kupplung (41, 42) durch das Verschwenken der Schwenkplatte (16) betätigbar ist.

19. Schwenk- und Fächerantrieb nach Anspruch 18, bei welchem die Kupplung (41, 42) in einer Ruhestellung der Schwenkplatte (16) geschlossen und in einer davon abweichenden Schwenkstellung der Schwenkplatte (16) geöffnet ist.

20. Schwenk- und Fächerantrieb nach Anspruch 19, bei welchem die Kupplung (41, 42) durch ein vom Drehteller (12) über eine Getriebewelle (35) angetriebenes Ritzel (41) und einen auf der Fächerwelle (18) sitzenden Zahnkranz (42) gebildet ist, welcher beim Einschwenken der Schwenkplatte (16) in die Ruhestellung in Eingriff mit dem Ritzel (41) und beim Ausschwenken der Schwenkplatte (16) aus der Ruhestellung außer Eingriff kommt.

## Claims

1. A pivot and fanning drive (3) for solar panels (2),
with a turning plate (12), and
a swivel plate (16) on which the solar panels (2) can be mounted about a fan axis (5) such that they can be fanned in and out,
**characterized in that** the pivot and fanning drive (3) is further provided with the following:
at least one crank (20), which is rotatably mounted on the turning plate (12), and
a connecting rod (23) which connects the crank (20) with the swivel plate (16), such that the turning plate (12), the swivel plate (16), the crank (20) and the connecting rod (23) form a crankshaft gear, with a swivel movement of the crank (20) causing a swivel movement of the swivel plate (16) around a substantially horizontal axis (7).

2. The pivot and fanning drive according to claim 1, under which the swivel plate (16) allows for swivelling around the horizontal axis (7) between a horizontal position and a vertical one.

3. The pivot and fanning drive according to claim 1 or 2, by which the swivel plate (16) is mounted on a swivel position on the turning plate (12) around the substantially horizontal axis (7); preferably between a rest position in which the swivel plate (16) is substantially parallel to and above the turning plate (12) and in an approximately vertical end position in which the crank (20) and the connecting rod (23) are essentially stretched.

4. The pivot and fanning drive according to claim 3, by which the turning plate (12) is mounted with an end (15) of the swivel plate (16) around the said horizontal axis (7) and at a distance from it which mounts at least one crank (20), which is coupled with the other end (24) of the swivel plate (16) via the connecting rod (23) as part of the crankshaft gear formation.

5. The pivot and fanning drive according to claim 4, by which the turning plate (12) has two towering bearing arms (14), between which the said single end (15) of the swivel plate (16) is mounted.

6. The pivot and fanning drive according to claim 4 or 5, by which two cranks (20) are each provided with a connecting rod (23), and the said other end (24) of the swivel plate (16) is mounted between the two connecting rods (23).

7. The pivot and fanning drive according to claim 6, by which the cranks (20) are located on a common shaft (21) which is mounted in bearing tabs (22) of the turning plate (12), wherein one axis (21') of the shaft (21) preferably is parallel to and at a distance from the horizontal axis (7).

8. The pivot and fanning drive according to any of the previous claims, by which the turning plate (12) is manufactured integrally - possibly with bearing arms (14) and bearing tabs (22), if any - preferably as a cast part.

9. The pivot and fanning drive according to any of the previous claims, by which a bearing axis (21') of the cranks (20) is positioned deeper on the turning plate (12) than the horizontal axis (7).

10. The pivot and fanning drive according to any of the previous claims, by which the crank(s) (20) is/are driven by an initial gear, e.g. an initial worm gear (28), by an initial gear positioned on the turning plate (12), e.g. an initial electrical motor (26, 27).

11. The pivot and fanning drive according to any of the previous claims, further with a base carrier (9) on which the turning plate (12) is at least pivotable around a vertical axis (6), and preferably fully rotatable, is mounted.

12. The pivot and fanning drive according to claim 11, by which the turning plate (12) is driven via a second gear, e.g. a second worm gear (31), by the second gear which is mounted on the base carrier (9), e.g. a second electrical motor (29, 30).

13. The pivot and fanning drive according to any of the previous claims, further with a fanning shaft (18) which is mounted on the swivel plate (16), such that it is pivotable around the fan axis (5) relative to the swivel plate (16).

14. The pivot and fanning drive according to claim 13, along with a number of solar panels (2) installed on the fanning shaft (18) such that at least one of the solar panels (2) can be moved together with the fanning shaft (18).

15. The pivot and fanning drive according to claim 13 or 14, by which the fanning shaft (18) can be driven by a third drive installed on the swivel plate (16) e.g. a third electrical motor (32, 33) via a third gear (34), e.g. a third worm gear (34).

16. The pivot and fanning drive according to claim 13 or 14, by which the fanning shaft (18) can be driven via a coupling from the swivel plate (16) or by a drive (26-28) of the swivel plate (16).

17. The pivot and fanning drive according to claim 13 or 14, by which the fanning shaft (18) can be driven, via a coupling (41, 42), by the turning plate (12) or by a drive (29-31) of the turning plate (12).

18. The pivot and fanning drive according to claim 17, by which the coupling (41, 42) can be operated via the pivoting of the swivel plate (16).

19. The pivot and fanning drive according to claim 18, by which the coupling (41, 42) becomes locked when the swivel plate (16) is in an idle position and opened when the swivel plate (16) is in a different position.

20. The pivot and fanning drive according to claim 19, by which the coupling (41, 42) takes place via a pinion (41) which is driven by the turning plate (12) via a gear shaft (35) and a sprocket (42) which is formed on the fanning shaft (18), which engages with the pinion (41) when the swivel plate (16) is swung into the idle position, and becomes unengaged when the swivel plate (16) is swung out of the idle position.

## Revendications

1. Entraînement à pivotement et à déploiement (3) pour panneaux solaires (2), doté :
d'un plateau tournant (12), et
d'une plaque pivotante (16), sur laquelle les panneaux solaires (2) peuvent être logés de manière à se replier et à se déplier tout autour d'un axe de déploiement (5),
**caractérisé en ce que** l'entraînement à pivotement et à déploiement (3) est pourvu par ailleurs :
d'au moins une manivelle (20) qui est logée de manière à pouvoir tourner sur le plateau tournant (12), et
d'une bielle (23) qui couple la manivelle (20) à la plaque pivotante (16) de telle sorte que le plateau tournant (12), la plaque pivotante (16), la manivelle (20) et la bielle (23) forment une transmission oscillante par manivelle et un mouvement pivotant de la manivelle (20) fait pivoter la plaque pivotante (16) autour d'un axe sensiblement horizontal (7).

2. Entraînement à pivotement et à déploiement selon la revendication 1, où la plaque pivotante (16) peut être pivotée autour de l'axe horizontal (7) entre une position horizontale et une position verticale.

3. Entraînement à pivotement et à déploiement selon la revendication 1 ou la revendication 2, où la plaque pivotante (16) est logée sur le plateau tournant (12) de manière à pouvoir pivoter autour de l'axe sensiblement horizontal (7), de préférence entre une position de repos, dans laquelle la plaque pivotante (16) se situe de manière sensiblement parallèle par rapport au plateau tournant (12) et au-dessus de celui-ci, et une position finale sensiblement verticale, dans laquelle la manivelle (20) et la bielle (23) sont sensiblement étirées.

4. Entraînement à pivotement et à déploiement selon la revendication 3, où le plateau tournant (12) loge une extrémité (15) de la plaque pivotante (16) autour dudit axe horizontal (7) et loge à distance de celle-ci l'au moins une manivelle (20), laquelle est couplée à l'autre extrémité (24) de la plaque pivotante (16) par le biais de la bielle (23) pour constituer l'entraînement oscillant par manivelle.

5. Entraînement à pivotement et à déploiement selon la revendication 4, où le plateau tournant (12) présente deux bras de palier (14) s'élevant vers le haut, entre lesquels ladite une extrémité (15) de la plaque pivotante (16) est logée.

6. Entraînement à pivotement et à déploiement selon la revendication 4 ou la revendication 5, où deux manivelles (20) sont prévues avec respectivement une bielle (23) et ladite autre extrémité (24) de la plaque pivotante (16) est montée entre les deux bielles (23).

7. Entraînement à pivotement et à déploiement selon la revendication 6, où les manivelles (20) reposent sur un arbre (21) commun qui est logé dans des pattes (22) de palier du plateau tournant (12), dans lequel un axe (21') de l'arbre (21) se situe de préférence de manière parallèle par rapport à l'axe horizontal (7) et à une distance de celui-ci.

8. Entraînement à pivotement et à déploiement selon l'une quelconque des revendications précédentes, où le plateau tournant (12) est fabriqué d'un seul tenant - éventuellement avec des bras de palier (14) et des pattes (22) de palier s'ils sont présents, de manière préférée sous forme d'une pièce en fonte.

9. Entraînement à pivotement et à déploiement selon l'une quelconque des revendications précédentes, où un axe (21') de palier de la manivelle (20) se situe plus bas sur le plateau tournant (12) que l'axe horizontal (7).

10. Entraînement à pivotement et à déploiement selon l'une quelconque des revendications précédentes, où la/les manivelle(s) (20) est entraînée/sont entraînées par un premier entraînement monté sur le plateau tournant (12), par exemple un premier moteur électrique (26, 27) par le biais d'une première transmission, par exemple d'une première transmission (28) à vis sans fin.

11. Entraînement à pivotement et à déploiement selon l'une quelconque des revendications précédentes, doté par ailleurs d'un support de base (9), sur lequel le plateau tournant (12) est logé au moins de manière à pouvoir pivoter, de manière préférée de manière à pouvoir tourner en totalité, autour d'un axe sensiblement vertical (6).

12. Entraînement à pivotement et à déploiement selon la revendication 11, où le plateau tournant (12) est entraîné par un deuxième entraînement monté sur le support de base (9), par exemple un deuxième moteur électrique (29, 30) par le biais d'une deuxième transmission, par exemple d'une deuxième transmission (31) à vis sans fin.

13. Entraînement à pivotement et à déploiement selon l'une quelconque des revendications précédentes, doté par ailleurs d'un arbre de déploiement (18) qui est logé sur la plaque pivotante (16) de telle sorte qu'il peut pivoter tout autour de l'axe de déploiement (5) par rapport à la plaque pivotante (16).

14. Entraînement à pivotement et à déploiement selon la revendication 13, doté par ailleurs d'un nombre de panneaux solaires (2) qui sont installés sur l'arbre de déploiement (18) de telle sorte qu'au moins un des panneaux solaires (2) peut être déplacé conjointement avec l'arbre de déploiement (18).

15. Entraînement à pivotement et à déploiement selon la revendication 13 ou la revendication 14, où l'arbre de déploiement (18) peut être entraîné par un troisième entraînement monté sur la plaque pivotante (16), par exemple un troisième moteur électrique (32, 33), par le biais d'une troisième transmission (34), par exemple d'une troisième transmission (34) à vis sans fin.

16. Entraînement à pivotement et à déploiement selon la revendication 13 ou la revendication 14, où l'arbre de déploiement (18) peut être entraîné par la plaque pivotante (16) ou par un entraînement (26 - 28) de la plaque pivotante (16) par le biais d'un couplage.

17. Entraînement à pivotement et à déploiement selon la revendication 13 ou 14, où l'arbre de déploiement (18) peut être entraîné par le plateau tournant (12) ou par un entraînement (29 - 31) du plateau tournant (12) par l'intermédiaire d'un couplage (41, 42).

18. Entraînement à pivotement et à déploiement selon la revendication 17, où le couplage (41, 42) peut être actionné par le pivotement de la plaque pivotante (16).

19. Entraînement à pivotement et à déploiement selon la revendication 18, où le couplage (41, 42) est fermé dans une position de repos de la plaque pivotante (16) et est ouvert dans une position de pivotement, différente de celle-ci, de la plaque pivotante (16).

20. Entraînement à pivotement et à déploiement selon la revendication 19, où le couplage (41, 42) est formé par un pignon (41) entraîné par le plateau tournant (12) par le biais d'un arbre de transmission (35) et par une couronne dentée (42) reposant sur l'arbre de déploiement (18), laquelle vient en prise avec le pignon (41) lors du pivotement de la plaque pivotante (16) dans la position de repos et se désengage lors du pivotement de la plaque pivotante (16) hors de la position de repos.
